# DEMANDE DE BREVET EUROPEEN

(11) **EP 1 357 409 A1**
(43) Date de publication de la demande: **29.10.2003**
(21) Numéro de dépôt: 03100651.3
(22) Date de dépôt: 14.03.2003
(51) Int. Cl.: G02B 6/35

(54) **Matrice de commutateurs optiques et procédé de fabrication d'une telle matrice**

(30) Priorité: 11.04.2002 FR 0204512
(71) Demandeur: Memscap, 38190 Bernin (FR)
(72) Inventeur: KHALIL, Diaa, , LE CAIRE (EG); MADKOUR, Kareem, 11341, LE CAIRE (EG); SAADANY, Bassam, 11371, LE CAIRE (EG); BADRELDIN, Tarek, 11361, LE CAIRE (EG); HELIN, Philippe, 38100, GRENOBLE (FR)
(74) Mandataire: Palix, Stéphane

(57) **Abrégé**

Matrice de commutateurs optiques, réalisée à partir d'un substrat à base de matériau semi-conducteur ou diélectrique, comportant :
- au moins un ensemble de fibres optiques d'entrée (12) et au moins un ensemble de fibres optiques de sortie (14) orientés sensiblement perpendiculairement l'un par rapport à l'autre,
- un ensemble de miroirs mobiles (5,13) disposés aux intersections des directions définies par les différentes fibres optiques, chaque miroir (13) étant apte à se déplacer pour assurer la réflexion d'un faisceau issu d'une fibre optique d'entrée à destination d'une fibre optique de sortie,
- un ensemble de canaux définis entre les miroirs, et à l'intérieur desquels se propagent les différents faisceaux avant et après avoir rencontré les miroirs,
**caractérisée** en ce que :
- l'ensemble de miroirs est réalisé sur une première galette de substrat (2), ladite première galette étant recouverte d'une seconde galette de substrat (20),
- les différents canaux (38) sont formés entre des zones en excroissance (34) présentes sous la seconde galette de substrat, lesdites zones en excroissance comportant des logements (33) à l'intérieur desquels peuvent se déplacer les miroirs mobiles.

## Description

### Domaine technique

L'invention se rattache au domaine de la microélectronique appliquée aux télécommunications par voie optique. Elle concerne plus précisément les composants optiques micro-électromécaniques assurant les fonctions de commutations, communément appelées "switch". L'invention vise plus spécifiquement la structure d'un composant incluant une matrice d'un tel commutateur, permettant d'assurer la liaison configurable entre différentes fibres optiques. L'invention vise à améliorer le comportement optique de tels composants tels que les brasseurs optiques, couramment appelés "optical cross connect (OXC)" ou les multiplexeurs à insertion/extraction, plus connus sous l'appellation de "Add-Drop Multiplexer (ADM)", notamment vis-à-vis des phénomènes de pertes d'insertion.

### Techniques antérieures

De façon générale, une matrice de commutateurs optiques, ou "optical cross connect (OXC)", comporte un ensemble de fibres optiques d'entrée et un ensemble de fibres optiques de sortie qui sont disposés perpendiculairement. Ces deux ensembles de fibres optiques sont disposés chacun sur deux côtés adjacents d'une zone rectangulaire, qui regroupe une pluralité de structures réfléchissantes. Chaque structure réfléchissante ou miroir est orienté pour pouvoir réfléchir le faisceau lumineux issu d'une fibre optique d'entrée vers une fibre optique de sortie. Chacune de ces structures réfléchissantes peut être déplacée de façon individuelle pour assurer ou non cette réflexion. Il est ainsi possible d'assurer la liaison entre n'importe quelle fibre optique d'entrée et n'importe quelle fibre de sortie.

Certaines matrices de switchs comportent également un second ensemble de fibres optiques d'entrée et un second ensemble de fibres optiques de sortie disposés sur les deux autres côtés de la zone rectangulaire de la matrice. Le second ensemble de fibres d'entrée est situé dans l'alignement du premier ensemble de fibres de sortie, et de façon complémentaire, le second ensemble de fibres de sortie est situé dans le prolongement du premier ensemble de fibres d'entrée. En agissant de façon appropriée sur les différentes structures réfléchissantes, qui sont réfléchissantes sur leurs deux faces, on augmente le nombre de liaisons qui peuvent être établies ou coupées par le composant optique qui effectue ainsi des fonctions généralement qualifiées de "add-drop".

De façon générale, lorsque les faisceaux issus des fibres optiques se propagent au sein du composant, on observe des pertes qualifiées de "pertes d'insertion", qui sont fonction de multiples paramètres. Ces pertes peuvent être fonction notamment de la longueur du chemin optique parcouru par les faisceaux, qui varie au sein de la matrice de commutateur. Ces pertes sont également fonction du coefficient de réflexion sur le miroir que rencontre le faisceau. Or, d'un miroir à l'autre, au sein de la matrice, ce coefficient de réflexion peut légèrement varier, de sorte que les pertes ne sont pas uniformes d'un faisceau à l'autre.

De même, les pertes d'insertion peuvent résulter d'un léger défaut d'alignement des fibres par rapport au miroir, ou bien du miroir par rapport aux directions théoriques des faisceaux. Ces pertes peuvent également provenir d'une divergence trop importante des faisceaux due à une collimation non optimale.

Pour tenter de diminuer les pertes d'insertion, il a été proposé dans le document WO/05012 d'équiper la matrice de commutateur d'un ensemble de guides d'ondes, disposés entre les différents miroirs. Plus précisément, ces guides d'ondes sont réalisés sous le plan sur lequel reposent les structures réfléchissantes. Lorsque les miroirs ou structures réfléchissantes sont déplacés, les faisceaux qui leur parviennent sont réfléchis au niveau inférieur, à l'intérieur des guides d'ondes en question. Le faisceau se propage alors à l'intérieur de ce guide d'ondes jusqu'à destination des fibres de sortie, qui sont situées en dessous du plan des fibres d'entrée. On conçoit que cette architecture présente de multiples inconvénients, puisqu'elle différencie le positionnement des fibres d'entrée des fibres de sortie, qui sont situées à des niveaux différents. En outre, la réalisation d'une telle structure est particulièrement complexe, puisqu'elle nécessite un nombre de niveaux de masque important.

Enfin et surtout, à cause du fort angle avec lequel les faisceaux réfléchis pénètrent dans les guides d'ondes, le nombre de réflexions au sein du guide d'ondes est particulièrement élevé, avec inévitablement des pertes importantes. On notera également que le revêtement métallique du guide d'ondes est source de pertes qui sont fonction de la polarisation du faisceau. Ce type de pertes, communément appelé PDL pour "Polarization Dependant Loss", peut donc être prohibitif pour certaines applications.

D'autres solutions ont été proposées dans les documents US 2002/034372 et US 2001/024556, qui consistent à disposer des guides d'onde entre les structures réfléchissantes. Ces guides d'ondes sont formés dans un matériau qui présente un indice de réfraction supérieur à celui du milieu environnant, qui peut être l'air ou un liquide, et ce pour forcer les faisceaux à se réfléchir à l'intérieur du guide d'onde, plutôt que se transmettre au milieu environnant. L'inconvénient majeur de ces solutions réside dans le fait que ces guides d'onde sont bien entendu interrompus à proximité des structures réfléchissantes, pour en permettre le libre mouvement. Il s'ensuit la présence d'interfaces entre le guide d'onde et le milieu environnant. Ces interfaces sont le siège de phénomènes de réflexion qui sont la source de pertes de propagation. Ces pertes sont d'autant plus importantes que la matrice comporte un nombre élevé de structures réfléchissantes, et donc d'interfaces entre guides d'onde et milieu environnant.

Un problème que se propose de résoudre l'invention est celui de réduire ou, plus précisément, uniformiser les pertes d'insertion pour les différents faisceaux se propageant au sein d'une même matrice. Un second problème que cherche à résoudre l'invention est celui de compenser certains défauts d'alignement des différentes fibres, ou de construction la matrice de commutateur. Un objectif de l'invention est de permettre de résoudre ces différents problèmes sans complexifier le procédé de fabrication du composant.

### Exposé de l'invention

L'invention concerne donc une matrice de commutateurs optiques réalisée à partir d'un substrat à base de matériau semi-conducteur ou diélectrique. Une telle matrice comporte de façon connue au moins un ensemble de fibres d'entrée et au moins un ensemble de fibres optiques de sortie orientés sensiblement perpendiculairement l'un à l'autre. Une telle matrice comporte également un ensemble de miroirs mobiles disposés aux intersections des directions définies par les différentes fibres optiques, chaque miroir étant apte à se déplacer pour assurer la réflexion d'un faisceau issu d'une fibre optique d'entrée à destination d'une fibre optique de sortie. La matrice comporte également un ensemble de canaux définis entre les miroirs, à l'intérieur desquels se propagent les différents faisceaux avant et après avoir rencontré les miroirs.

Conformément à l'invention, cette matrice de commutateurs se caractérise en ce que l'ensemble de miroirs est réalisé sur une première galette de substrat, cette galette étant recouverte d'une seconde galette de substrat formant un couvercle. Les différents canaux sont formés entre des zones en excroissance présentes sous la seconde galette de substrat. Ces zones en excroissance comportent des logements à l'intérieur desquels peuvent se déplacer les miroirs mobiles.

Autrement dit, les espaces définis entre les miroirs sont majoritairement comblés par des zones formant des protubérances sous la galette formant le couvercle de la matrice. Ces zones en protubérance comportent des canaux à l'intérieur desquels se propagent les faisceaux à destination du miroir, ou provenant d'un miroir. Ainsi, la majorité du chemin optique parcouru par le faisceau au sein de la matrice se fait à l'intérieur des canaux, qui sont totalement continus, sans transition entre matériaux différents. Ces canaux agissent comme des guides d'ondes en quelque sorte "inversés", car ils présentent un indice de réfraction inférieur à celui du milieu environnant . A l'intérieur de ce guide d'ondes, le faisceau se réfléchit sur les parois des canaux. De façon surprenante, bien que les faisceaux se réfléchissent partiellement sur le substrat formant les parois des canaux, on observe un taux de perte au sein du guide d'ondes qui est faible, et qui procure donc un avantage global par rapport aux composants ne comportant pas de guides d'ondes. En effet, le fait que la gaine du canal soit réalisée en substrat, et typiquement en silicium dont l'indice de réfraction est de 3,5, pourrait laisser penser que les pertes d'insertion seraient importantes. Toutefois, le faisceau étant globalement collimaté, les angles d'incidence des faisceaux se propageant dans les guides d'ondes par rapport aux parois de ce dernier sont relativement faibles, ce qui induit donc un taux de perte qui est, de façon surprenante, particulièrement faible.

Dans une forme particulière de réalisation, la paroi des canaux la plus éloignée de la seconde galette de substrat formant le couvercle est réalisée par une troisième galette de substrat. Cette troisième galette est ouverte dans les zones recevant les miroirs, pour permettre le passage de ces derniers.

En pratique, les canaux peuvent avoir une section rectangulaire, qui peut préférentiellement être carrée. Selon le procédé de réalisation de ces canaux, ces derniers peuvent également adopter d'autres sections, telles que trapézoïdale, triangulaire, voire circulaire.

Avantageusement en pratique, l'insertion des fibres optiques et des organes de collimation associés se fait dans des logements qui sont formés en partie dans la première et dans la seconde galette de substrat. Autrement dit, la seconde galette de substrat formant le couvercle possède des rainures dans lesquelles se loge une partie de la circonférence des fibres optiques.

L'invention concerne également un procédé de fabrication permettant d'obtenir une telle matrice de commutateurs.

Conformément à l'invention, ce procédé comprend plusieurs étapes consistant :
- sur une première galette de substrat, à réaliser l'ensemble des miroirs mobiles,
- sur une seconde galette de substrat, destinée à recouvrir la première galette, à définir une zone en surépaisseur, de dimensions sensiblement inférieures à celles de la matrice de miroirs mobiles,
- à réaliser sur ladite zone en surépaisseur :
   . un ensemble de canaux aux emplacements des faisceaux issus et à destination des fibres optiques,
   . un ensemble de rainures diagonales aux emplacements des miroirs mobiles,
- à recouvrir la seconde galette d'une troisième galette, de manière à fermer lesdits canaux définis sur la zone en surépaisseur,
- à réaliser dans la troisième galette des ouvertures pour faire déboucher les rainures diagonales formées dans la zone en surépaisseur,
- à recouvrir la première galette de l'ensemble formé de la seconde et la troisième galette, de sorte qu'entre les miroirs, les faisceaux issus et à destination des fibres optiques cheminent dans les canaux définis dans la zone en surépaisseur et que les miroirs sont aptes à pénétrer dans les logements définis par les rainures diagonales.

Autrement dit, le composant est réalisé à partir de plusieurs galettes ou wafer de substrat. La première galette comporte l'ensemble des miroirs mobiles, ou plus généralement des structures réfléchissantes. Ces structures réfléchissantes sont associées à certaines portions déformables et aux actionneurs, au sein d'une structure formant un cadre assurant une certaine rigidité à l'ensemble. L'ensemble des guides d'ondes est réalisé sous la galette de substrat qui sert de couvercle à la matrice. Les guides d'ondes sont réalisés de telle manière que lorsque le couvercle est mis en place sur la matrice de miroir, ces guides d'ondes se disposent exactement entre les miroirs sans interférer mécaniquement avec les portions de liaison des miroirs au reste du substrat. De la sorte, l'espace compris entre les miroirs peut être occupé de façon optimisée, avec un trajet en dehors des guides d'ondes qui est extrêmement limité.

En pratique, on préfèrera qu'avant la réalisation de la zone en surépaisseur sur la seconde galette, on définisse sur cette dernière, en périphérie de la zone en surépaisseur, des rainures destinées à former une partie de logement recevant les fibres optiques. De la sorte, lorsque le couvercle est mis en place sur la matrice de miroir, les portions des fibres optiques qui dépassent du plan supérieur pénètrent dans ces rainures caractéristiques.

Avantageusement en pratique, on peut utiliser pour former la troisième galette, qui referme les canaux des guides d'ondes, un substrat d'une épaisseur suffisante pour en assurer la manipulation. Cette troisième galette, après être mise en place, peut ensuite être diminuée d'épaisseur.

### Description sommaire des figures

La manière de réaliser l'invention, ainsi que les avantages qui en découlent, ressortiront bien de la description du mode de réalisation qui suit, à l'appui des figures annexées dans lesquelles :
La figure 1 est une vue en perspective sommaire d'une matrice de commutateurs, montrée avant la mise en place des guides d'ondes caractéristiques.
Les figures 2 à 7 sont des vues en coupe schématique montrant les différentes étapes de réalisation de la structure comportant les guides d'ondes, avant sa mise en place sur la matrice de miroirs.
La figure 8 illustre le masque de gravure utilisé pour obtenir la structure illustrée en perspective sommaire à la figure 9.
La figure 10 illustre le masque de gravure utilisé pour obtenir la structure illustrée en perspective sommaire à la figure 11.
La figure 12 est une vue de détail en perspective sommaire de la zone (XII) de la figure 11.
La figure 13 illustre le masque de gravure utilisé pour obtenir la structure illustrée en perspective sommaire à la figure 14.
La figure 15 est une vue en coupe illustrant une cellule de la matrice de commutateurs.
La figure 16 est une vue de détail de côté illustrant la forme des logements dans lesquels sont mises en place les fibres optiques.

Bien entendu, les dimensions des éléments représentés aux figures ont été choisies pour permettre de bien comprendre l'invention, et peuvent s'écarter des dimensions des éléments réels.

### Manière de réaliser l'invention

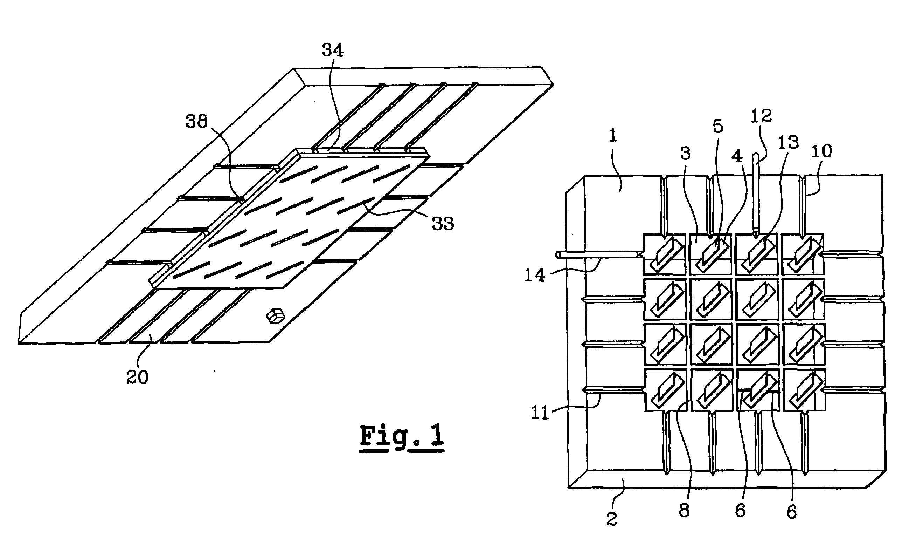

Comme déjà évoqué, l'invention concerne une matrice de commutateurs optiques dont l'élément actif est illustré à la figure 1.

Un tel élément (1) est réalisé à partir d'une galette de substrat (2) qui peut typiquement être du silicium, du silicium sur isolant (SOI) ou de façon plus générale, tout type de substrat susceptible d'être gravé par les procédés connus dans le domaine de fabrication des systèmes micro-électromécaniques (MEMS).

Cet élément (1) comprend une matrice de cellules (3) formant chacune un commutateur unitaire. Chaque cellule comprend une partie mobile (4) sur laquelle est montée une structure réfléchissante (5) formant un miroir. Cette structure mobile peut être déplacée par l'intermédiaire d'un actionneur (non représenté) pour se déplacer perpendiculairement au plan principal du substrat. Des portions de liaison (6) illustrées schématiquement à la figure 1 permettent le déplacement de la partie mobile (4) par rapport à un cadre (8) formé par les différentes portions situées entre chaque cellule (3).

L'élément (1) comporte également un certain nombre de rainures (10) dont la section est en forme de V, de sorte que ces rainures sont communément appelées "V-groove". Ces rainures (10) sont destinées à accueillir les différentes fibres optiques. D'une façon conventionnelle, l'ensemble des fibres d'entrée est disposé sur un côté du carré formant la matrice, tandis que les fibres de sortie sont disposées sur le côté adjacent. De la sorte, les faisceaux issus d'une fibre (12) après réflexion sur le miroir (13), se propagent jusqu'à la fibre de sortie (14).

Bien entendu, l'invention couvre également des types de commutateurs différents, effectuant des fonctions communément qualifiées de multiplexage par insertion/extraction ou "add-drop multiplexing". Ces commutateurs nécessitent dans ce cas la présence d'un second ensemble de fibres optiques de sortie, situé sur le côté opposé au premier ensemble de fibres d'entrée, ainsi qu'un second ensemble de fibres d'entrée situé dans le prolongement du premier ensemble de fibres optiques de sortie.

Conformément à l'invention, l'espace situé entre les différents miroirs (5,13) est occupé par les guides d'ondes caractéristiques, présents sous l'élément (20) illustré à la figure 1, et réalisés comme expliqué ci-après.

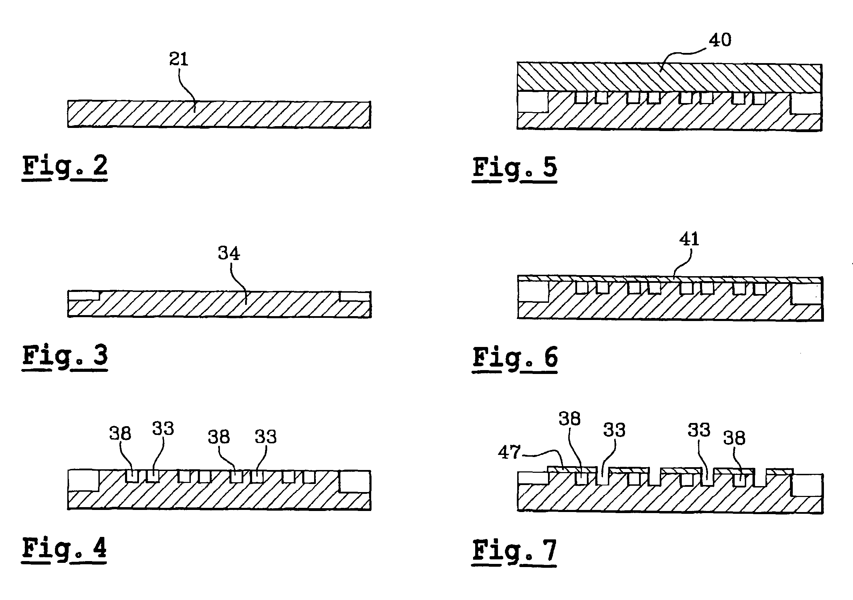

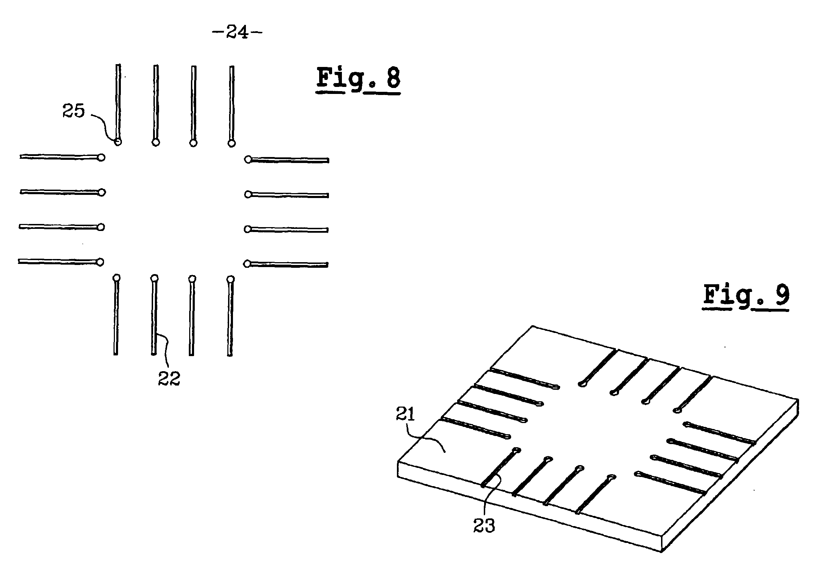

Ainsi, le couvercle (20) illustré à la figure 1 est réalisé comme illustré schématiquement à la figure 2 à partir d'une galette ou wafer de semi-conducteur, typiquement du silicium. Cette galette (21) subit des étapes de gravure sèche profonde ou "Deep Reactive Ion Etching" (DRIE) sur le masque illustré à la figure 8. Ce masque définit des motifs (22) qui lui permettent de réaliser des rainures (23) tel qu'illustré à la figure 9. Le masque (24) comprend également des motifs (25) permettant de définir les emplacements des organes de collimation situés en extrémité des fibres optiques. Typiquement, pour une application dans laquelle les fibres optiques présentent un diamètre de 125 microns, la gravure effectuée à l'aide du masque (24) présente une profondeur de l'ordre de 23 microns.

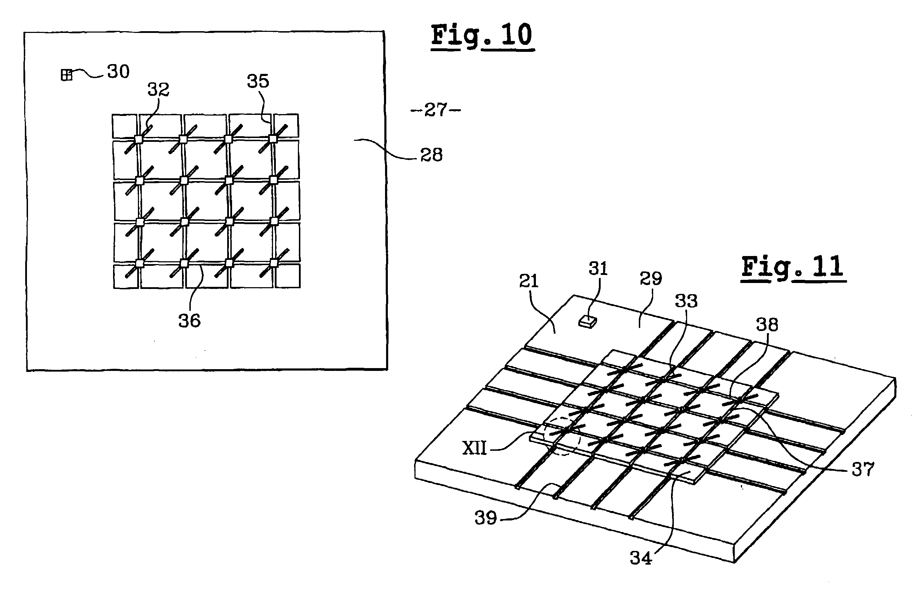

Par la suite, et comme illustré à la figure 4, on procède à une nouvelle étape de gravure profonde, par l'intermédiaire du masque (27) illustré à la figure 10. Ce masque (27) comporte une zone périphérique (28) permettant de graver la périphérie (29) du wafer (21). Ce masque comporte également un motif (30) permettant de générer un plot d'alignement (31) sur le wafer (21).

Conformément à l'invention, le masque (27) comprend également des motifs (32) correspondant aux emplacements des miroirs (5,13) de la matrice de commutateurs. Ces motifs diagonaux permettent donc de réaliser des rainures diagonales (33) sur la zone en excroissance (34) formée sur le wafer (21).

Selon une autre caractéristique de l'invention, le masque (27) comprend également des motifs (35,36) permettant de réaliser les canaux (37,38) illustrés à la figure 11. Ces canaux (37,38), tels qu'illustrés à la figure 4, définiront les futurs guides d'ondes caractéristiques.

Dans la figure 4, on observe également des portions des rainures (33) dans lesquelles pourront venir ultérieurement les zones extrêmes des structures réfléchissantes (5,13).

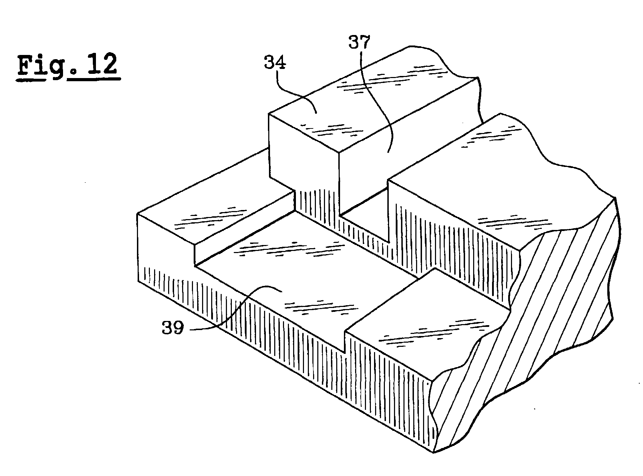

Cette étape de gravure, sur une profondeur de l'ordre de 80 microns, permet également de conserver les rainures (39), correspondant aux rainures (23) réalisées lors de l'étape de gravure précédente. Comme illustré à la figure 12, le fond du canal (37) et le fond de la rainure (39) sont décalées par rapport au plan de substrat de la profondeur de la première étape de gravure, soit typiquement de 23 microns pour l'application précitée. Dans la suite, on procède, comme illustré à la figure5, au dépôt d'un troisième wafer (40) au-dessus de la face à graver du second wafer (21). Cette mise en place s'effectue par des techniques classiques selon des opérations communément appelées "wafer bonding". Ce wafer (40) peut être réalisé également en silicium, ou plus généralement en matériau semi-conducteur qui peut être identique ou différent du matériau utilisé pour réaliser le second wafer (21).

Dans la suite, et comme illustré à la figure 6, le troisième wafer (40) subit une étape de gravure destinée à en réduire son épaisseur. A la fin de cette opération, le troisième wafer (41) possède une épaisseur de l'ordre de 200 microns.

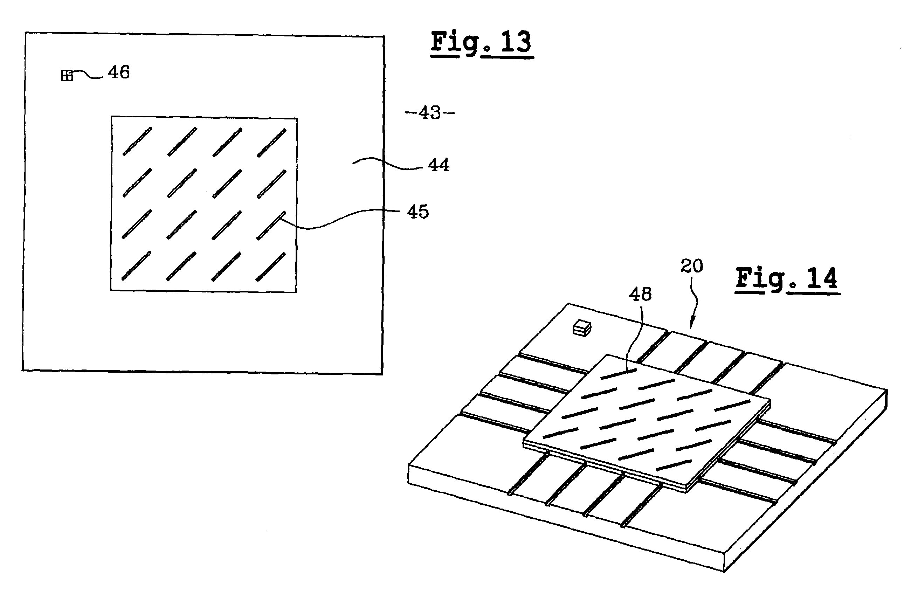

Par la suite, et comme illustré à la figure 7, on procède à la gravure du troisième wafer (41), par l'intermédiaire du masque (43) illustré à la figure 13. Grâce à sa zone périphérique (44), ce masque (43) permet d'éliminer la partie périphérique du wafer (41), dans les zones extérieures à la zone en surépaisseur (34). Ce masque (43) comprend également un ensemble de motifs (45) correspondant aux différentes rainures (33) destinées à recevoir les extrémités des miroirs. Le masque (43) comprend également un motif (46) correspondant aux plots d'alignement (31). De la sorte, et après gravure, certaines portions du troisième wafer (41) sont éliminées pour définir les ouvertures (48) permettant de faire déboucher les rainures (33) préalablement obtenues.

Dans une opération ultérieure, le couvercle (20) ainsi obtenu est mis en place au dessus de la matrice de miroirs (1), par les opérations de "flip-chip".

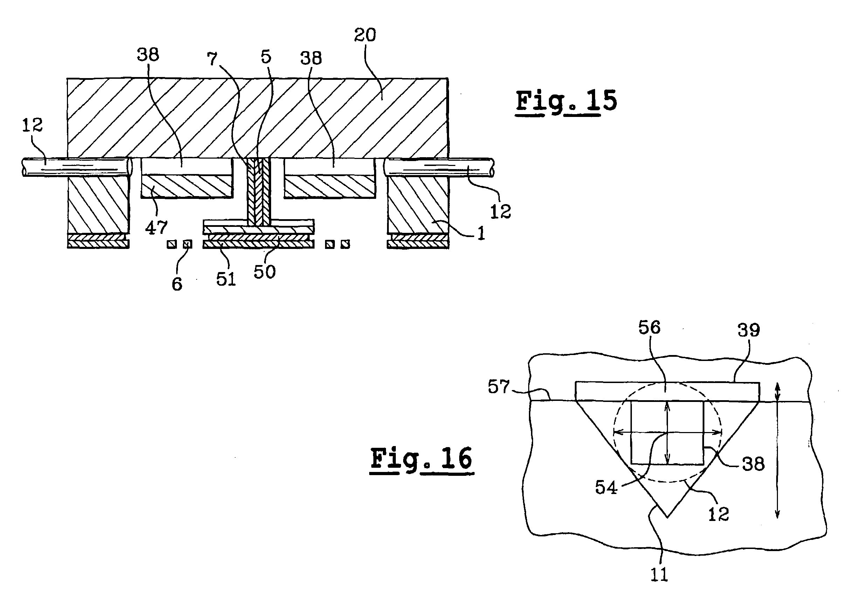

La configuration obtenue après assemblage est illustrée à la figure 15, pour une cellule élémentaire. Sur la figure 15, la structure a été représentée comme si la matrice ne comportait qu'un seul miroir, situé entre les portions recevant les fibres optiques (12). On observe ainsi la structure mobile (4) réalisée à partir d'un substrat SOI dont la couche d'isolant (50) permet de définir en partie inférieure une couche de silicium (51) de plus faible épaisseur, dans laquelle sont réalisées les portions déformables (6) reliant la structure mobile (4) au cadre fixe de l'élément (1). En partie supérieure, cette structure mobile comporte le miroir (5) comportant deux faces réfléchissantes. Sur la face inférieure du couvercle (20), on observe les guides d'ondes formés des canaux (38) et obturés par les couches (47) du troisième wafer (41).

On observe que la quasi-totalité de l'espace situé entre les différents miroirs, et entre les miroirs (5) et le cadre de la matrice (1), est occupée par les guides d'ondes (38), de sorte que les faisceaux se propageant au sein de la matrice sont guidés sur l'essentiel de leur parcours au sein de la matrice.

On notera également que lesdits canaux (38) des guides d'ondes se trouvent au même niveau que la portion centrale des fibres optiques (12), comme le montre la configuration illustrée à la figure 16. On observe en effet sur cette figure que la fibre optique (12) possède son centre (54) au niveau du centre du canal (38). Cela permet donc au faisceau qui est issu du coeur de la fibre de se trouver en regard du centre du canal du guide d'ondes, ce qui favorise sa configuration avec le minimum de réflexion sur le guide d'ondes, entraînant donc le minimum de pertes d'insertion.

Compte tenu de la géométrie cylindrique des fibres (12), lorsque celle-ci repose dans la rainure en forme de V (11), sa partie supérieure (56) dépasse le plan (57) par lequel le couvercle (20) repose sur le cadre (1). La portion (56) s'insert donc dans la rainure (39) ménagée à cet effet lors des étapes initiales de gravure. Le dimensionnement optimal de ces rainures (39) permet d'assurer le blocage de la fibre au sein de son logement, et à tout le moins, d'éviter que cette dernière ne puisse trop fortement se déplacer.

Bien entendu, le mode de réalisation décrit ci-avant, se rapportant à une matrice 4 x 4, n'est en aucun cas limitatif, et l'invention peut bien entendu se décliner pour des tailles très importantes de matrices, pouvant aller jusqu'à plusieurs dizaines de cellules de côté.

Il ressort de ce qui précède que la matrice de commutateurs conforme à l'invention présente de nombreux avantages, parmi lesquels on peut citer :
- le fait que les faisceaux lumineux cheminent sur la quasi-totalité de leur chemin optique à l'intérieur de canaux continus, sans interfaces entre matériaux différents, ce qui évite l'apparitions de phénomènes de réflexion qui génèrent des pertes dans les systèmes à guides d'onde traditionnels;
- la réalisation simultanée des guides d'ondes "inversés" et des zones recevant les miroirs permet de s'affranchir d'un certain nombre de défauts d'alignement des fibres optiques par rapport aux miroirs ;
- le procédé de fabrication de cette matrice est relativement simple, puisqu'il ne nécessite que trois niveaux de masques pour réaliser le couvercle dont la partie inférieure vise à remplir l'espace situé entre les différents miroirs.

## Revendications

1. Matrice de commutateurs optiques, réalisée à partir d'un substrat à base de matériau semi-conducteur ou diélectrique, comportant :
- au moins un ensemble de fibres optiques d'entrée (12) et au moins un ensemble de fibres optiques de sortie (14) orientés sensiblement perpendiculairement l'un par rapport à l'autre,
- un ensemble de miroirs mobiles (5,13) disposés aux intersections des directions définies par les différentes fibres optiques, chaque miroir (13) étant apte à se déplacer pour assurer la réflexion d'un faisceau issu d'une fibre optique d'entrée à destination d'une fibre optique de sortie,
- un ensemble de canaux définis entre les miroirs, et à l'intérieur desquels se propagent les différents faisceaux avant et après avoir rencontré les miroirs,
**caractérisée en ce que** :
- l'ensemble de miroirs est réalisé sur une première galette de substrat (2), ladite première galette étant recouverte d'une seconde galette de substrat (20),
- les différents canaux (38) sont formés entre des zones en excroissance (34) présentes sous la seconde galette de substrat, lesdites zones en excroissance comportant des logements (33) à l'intérieur desquels peuvent se déplacer les miroirs mobiles.

2. Matrice de commutateurs optiques selon la revendication 1, **caractérisée en ce que** la paroi des canaux la plus éloignée de la seconde galette (21) de substrat est réalisée par une troisième galette de substrat (41), ouverte dans les zones (48) recevant les miroirs mobiles.

3. Matrice de commutateurs optiques selon la revendication 1, **caractérisée en ce que** les canaux (38) ont une section rectangulaire, préférentiellement carrée.

4. Matrice de commutateurs optiques selon la revendication 1, **caractérisée en ce que** les fibres optiques et l'organe de collimation associé sont mis en place dans des logements (11,39) formés en partie dans la première et la seconde galette de substrat.

5. Procédé de fabrication d'une matrice de commutateurs optiques, réalisée à partir d'un substrat à base de matériau semi-conducteur ou diélectrique, comportant :
- au moins un ensemble de fibres optiques d'entrée (12) et au moins un ensemble de fibres optiques de sortie (14) orientés sensiblement perpendiculairement l'un par rapport à l'autre,
- un ensemble de miroirs mobiles (13) disposés aux intersections des directions définies par les différentes fibres optiques, chaque miroir étant apte à se déplacer pour assurer la réflexion d'un faisceau issu d'une fibre optique d'entrée, à destination d'une fibre optique de sortie,
**caractérisé en ce qu'**il comprend les étapes consistant :
- sur une première galette de substrat (2), à réaliser l'ensemble des miroirs mobiles (13),
- sur une seconde galette de substrat (21), destinée à recouvrir la première galette, à définir une zone en surépaisseur (34), de dimensions sensiblement inférieures à celles de la matrice de miroirs mobiles,
- à réaliser sur ladite zone en surépaisseur (34):
. un ensemble de canaux (38) aux emplacements des faisceaux issus et à destination des fibres optiques,
. un ensemble de rainures diagonales (33) aux emplacements des miroirs mobiles,
- à recouvrir la seconde galette d'une troisième galette (40), de manière à fermer lesdits canaux définis sur la zone en surépaisseur,
- à réaliser dans la troisième galette des ouvertures (48) pour faire déboucher les rainures diagonales (33) formées dans la zone en surépaisseur (34),
- à recouvrir la première galette (2) de l'ensemble formé de la seconde (21) et la troisième galette (40), de sorte qu'entre les miroirs (13), les faisceaux issus et à destination des fibres optiques cheminent dans les canaux (38) définis dans la zone en surépaisseur et que les miroirs sont aptes à pénétrer dans les logements définis par les rainures diagonales (33).

6. Procédé de fabrication selon la revendication 5, **caractérisé en ce que** avant ou pendant la réalisation de la zone en surépaisseur (34), on définit sur la seconde galette, en périphérie de la zone en surépaisseur, des rainures (39) destinées à former une partie des logements recevant les fibres optiques.

7. Procédé de fabrication selon la revendication 5, **caractérisé en ce que** après la mise en place de la troisième galette (40) sur la seconde (21), on diminue l'épaisseur de la troisième galette.
